# EUROPÄISCHE PATENTSCHRIFT

(11) **EP 1 374 352 B1**
(45) Veröffentlichungstag und Bekanntmachung des Hinweises auf die Patenterteilung: **25.05.2005**
(21) Anmeldenummer: 02707048.1
(22) Anmeldetag: 20.03.2002
(51) Int. Cl.: H01R 43/08, H01R 39/04

(54) **TROMMELKOMMUTATOR SOWIE VERFAHREN ZU SEINER HERSTELLUNG**
DRUM COMMUTATOR AND METHOD FOR PRODUCING THE SAME
COMMUTATEUR DE BOBINE ET SON PROCEDE DE REALISATION

(30) Priorität: 29.03.2001 DE 10115601
(43) Veröffentlichungstag der Anmeldung: 02.01.2004
(73) Patentinhaber: Kolektor Group D.O.O., 5280 Idrija (SI)
(72) Erfinder: POTOCNIK, Joze, 5280 Idrija (SI)
(74) Vertreter: Grättinger & Partner (GbR)
(86) Internationale Anmeldenummer: PCT/IB2002/000836
(87) Internationale Veröffentlichungsnummer: WO 2002/080315

(56) Entgegenhaltungen:
- EP-A- 0 935 331
- DE-A- 19 903 921
- DE-A- 19 925 286
- US-A- 5 637 944
- US-A- 6 160 337

## Beschreibung

Die vorliegende Erfindung betrifft einen Trommelkommutator, umfassend einen aus isolierendem Preßstoff gefertigten hülsenförmigen Trägerkörper, eine Mehrzahl von metallischen Leitersegmenten und eine ebenso große Anzahl von Kohlenstoffsegmenten, welche mit den Leitersegmenten elektrisch leitend verbunden sind. Des weiteren betrifft die vorliegende Erfindung ein Verfahren zur Herstellung eines solchen Trommelkommutators.

Für bestimmte Anwendungen, insbesondere in Abhängigkeit von der zu übertragenden Stromstärke in Verbindung mit den Einbauverhältnissen, werden bei elektrischen Maschinen Trommelkommutatoren, auch Walzenkommutatoren genannt, eingesetzt, bei denen die Bürstenlauffläche auf einem zur Kommutatorachse konzentrischen Kreiszylinder angeordnet ist. Neben Trommelkommutatoren mit metallischer Bürstenlauffläche sind Trommelkommutatoren der eingangs angegebenen Art, bei welchen die Bürstenlauffläche auf den Kohlenstoffsegmenten angeordnet ist, in verschiedenen Ausführungen bekannt. Bei einer ersten bekannten Bauweise werden dabei die Kohlenstoffsegmente um die Leitersegmente herum geformt. Ein solcher Trommelkommutator sowie ein zu seiner Herstellung geeignetes Verfahren sind beispielsweise in der EP 0529911 B1 beschrieben. Auch die WO 99/57797 Al beschreibt einen entsprechenden Trommelkommutator und ein zu seiner Herstellung geeignetes Verfahren, das sich insbesondere dadurch auszeichnet, daß die Kohlenstoffsegmente um die Leitersegmente herum geformt werden. Das gleiche gilt für die DE 4241407 A1 und die US 5789842 A.

Gemäß einer grundsätzlich anderen Bauweise ist vorgesehen, daß eine die späteren Kohlenstoffsegmente umfassende Kohlenstoffhülse unabhängig von den Leitersegmenten vorgefertigt und erst später mit letzteren elektrisch leitend verbunden wird. Ein Trommelkommutator dieser Bauart und ein zu seiner Herstellung geeignetes Verfahren sind in der DE 3150505 A1 beschrieben, in welcher sämtliche Merkmale des Oberbegriffs des unabhängigen Anspruchs 9 beschrieben werden. Dabei wird eine Kohlenstoffhülse stirnseitig mit einem ringförmigen Leiterrohling durch Löten elektrisch leitend verbunden. Anschließend wird in die entsprechende Einheit innen ein hülsenförmiger Trägerkörper aus isolierender Preßstoffmasse eingespritzt. Schließlich werden die Kohlenstoffhülse und der Leiterrohling durch axiale Trennschnitte in einzelne Segmente unterteilt.

Es ist nicht bekannt, daß Trommelkommutatoren gemäß der DE 3150505 jemals mit Erfolg eingesetzt worden wären. Offensichtlich ist der aus diesem Dokument bekannte Trommelkommutator trotz der auf den ersten Blick überzeugenden Bauweise nicht praxistauglich.

Ebensowenig haben sich in der Praxis Trommelkommutatoren mit Kohlenstofflauffläche bewährt, bei denen die Kohlenstoffsegmente, wie weiter oben im Zusammenhang mit der EP 0529911 B1 und den insoweit vergleichbaren Veröffentlichungen erläutert, an die Leitersegmente angeformt und anschließend angesintert wurden. Bei solchen Trommelkommutatoren ist immer wieder ein schlechter Kontakt zwischen den Kohlenstoffsegmenten und den zugeordneten Leitersegmenten beobachtet worden. In diesem Zusammenhang ist zu berücksichtigen, daß Trommelkommutatoren der hier in Rede stehenden Art extremen Betriebsbedingungen unterworfen sind. Aus diesem Grund wird gefordert, daß sie in sämtlichen in Betracht kommenden Umgebungsbedingungen (insbesondere unterschiedlichsten Kraftstoffen) mehrere hundert Zyklen mit Betriebstemperaturen von -40°C bis +110°C überstehen, ohne auszufallen. Bei den entsprechenden strengen Tests zeigen bekannte Trommelkommutatoren der eingangs angegebenen Bauweise immer wieder unzulässig hohe Widerstände, was auf eine schlechte Kontaktierung zwischen den Kohlenstoffsegmenten und den Leitersegmenten hindeutet, oder aber fallen vollständig aus. Hierfür mag mit ursächlich sein, daß die Drähte der Rotorwicklung, die an den Kommutator angeschlossen wird, regelmäßig an die Leitersegmente angeschweißt werden. Durch die dabei entstehenden sehr hohen Temperaturen dehnt sich das betreffende metallische Leitersegment kurzfristig in einem nicht unerheblichen Maße aus, um anschließend wieder zu schrumpfen. Dies führt nicht nur zu einer Beeinträchtigung der mechanischen Verbindung zwischen den Kohlenstoffsegmenten und den zugeordneten Leitersegmenten; vielmehr leidet in entsprechender Weise die elektrisch leitende Verbindung zwischen jenen Teilen mit dem Ergebnis, daß der Widerstand zunimmt. Dies wirkt sich deshalb besonders nachteilig aus, weil die Kohlenstoffmasse, die zur Herstellung von Kohlenstoffsegmenten durch Umformen der Leitersegmente eingesetzt wird, ohnehin einen vergleichsweise hohen Bindemittelgehalt (bis 30%) aufweist, was zu einer reduzierten Leitfähigkeit führt.

Vor dem Hintergrund dieses Standes der Technik liegt der vorliegenden Erfindung die Aufgabe zugrunde, einen praxistauglichen Trommelkommutator mit Kohlenstofflauffläche sowie ein zu dessen Herstellung geeignetes Verfahren anzugeben. Der Trommelkommutator soll dabei insbesondere auch bei kompakten Abmessungen robust und langlebig sein und strengen Anforderungen hinsichtlich der möglichen Betriebstemperaturen ohne Erhöhung des Widerstands genügen, wobei die Drähte der Rotorwicklung ohne die Gefahr von Beschädigungen an die Leitersegmente anschweißbar sein sollen.

Gelöst wird diese Aufgabenstellung gemäß der vorliegenden Erfindung durch das in Anspruch 1 angegebene Verfahren. Ein in Anwendung dieses Verfahrens herstellbarer erfindungsgemäßer Trommelkommutator ist in Anspruch 9 angegeben.

Ein erstes wesentliches Merkmal der vorliegenden Erfindung ist somit, daß die Kohlenstoffhülse, aus der in einem späteren Verfahrensschritt durch Trennschnitte die einzelnen Kohlenstoffsegmente hervorgehen, bei ihrem Zusammenfügen mit dem Leiterrohling zumindest im Bereich der radialen Innenfläche und einer axialen Stirnfläche metallisiert ist, wobei die metallisierte radiale Innenfläche der Kohlenstoffhülse beim Anspritzen des Trägerkörpers an das aus dem Leiterrohling und der Kohlenstoffhülse bestehende Verbundteil mit Preßstoff überdeckt wird. Die Metallisierung der mindestens einen axialen Stirnfläche soll dabei - in als solches bekannter Weise (vgl. DE 3150505 A1) - gewährleisten, daß die elektrisch leitende Verbindung zwischen den Kohlenstoffsegmenten und den Leitersegmenten durch Löten oder andere bekannte Fügeverfahren herstellbar ist. Zur Herstellung einer Kohlenstoffhülse mit einer metallisierten Stirnfläche eignet sich neben den als solches bekannten Verfahren der nachträglichen Metallisierung auch eine sogenannte "Zweistoff-Pressung", bei der eine Kohlenstoffhülse mit einer von Anfang an metallisierten Stirnfläche hergestellt wird. Dabei wird Kohlenstoffpulver und eine stirnseitige Schicht aus Metallpulver (z.B. Ag, Ms, Cu) gemeinsam in einer Form gepreßt und anschließend gesintert. In Abhängigkeit von den Dimensionen des Kommutators kann die Dicke der Metallschicht dabei z.B. 1 bis 2 mm betragen. Diese Variante eignet sich insbesondere für trocken betriebene Trommelkommutatoren; durch Verzicht auf die nachträgliche Metallisierung zeichnet sie sich durch günstige Kosten aus. Die Metallisierung der später an dem Trägerkörper anliegenden radialen Innenfläche der Kohlenstoffhülse wirkt sich demgegenüber in gänzlich anderer Hinsicht vorteilhaft aus, und zwar doppelt. Zum einen läßt sich auf diese Weise insbesondere bei Trommelkommutatoren gestreckter Bauweise, d.h. mit einer gegenüber dem Durchmesser vergleichsweise großen axialen Länge, der in den Kohlenstoffsegmenten bestehende Ohmsche Widerstand signifikant reduzieren. Der Stromfluß zwischen den Kontaktzonen der Kohlenstoffsegmente und den an den Bürstenlaufflächen anliegenden Bürsten erfolgt in diesem Falle zum weit überwiegenden Teil im Bereich der metallisierten inneren Oberfläche der Kohlenstoffsegmente, d.h. in den an den Trägerkörper angrenzenden radial inneren Bereichen der Kohlenstoffsegmente. Zum anderen führt die Metallisierung der radialen Innenfläche der Kohlenstoffhülse zu einer erhöhten Festigkeit in diesem Bereich. Insbesondere ist die Kohlenstoffhülse aufgrund der metallisierten inneren Oberfläche dort wirksam gegen Beschädigungen geschützt. Die sich hierdurch ergebende erhöhte Festigkeit der Kohlenstoffhülse und der später aus dieser hervorgehenden Kohlenstoffsegmente gestattet die Herstellung der Kohlenstoffhülse mit einem vergleichsweise geringen Bindemittelanteil (ca. 2-5%), was sich wiederum besonders günstig auf die Leitfähigkeit der Kohlenstoffsegmente auswirkt. Durch die erfindungsgemäße Metallisierung der an dem Trägerkörper anliegenden radialen Innenfläche der Kohlenstoffhülse läßt sich somit sowohl unmittelbar als auch mittelbar der Ohmsche Widerstand des Kommutators gegenüber bekannten Bauweisen drastisch reduzieren.

Gemäß einem zweiten wesentlichen Merkmal der vorliegenden Erfindung ist vorgesehen, daß der fertige Trommelkommutator benachbart zu den Anschlußfahnen der Leitersegmente eine ringförmige, geschlossene, im wesentlichen kreiszylindrische Oberfläche aufweist, die durch eine alternierende Abfolge von Preßstoffzonen, die dem Trägerkörper zugeordnet sind, und Metallzonen, die den Leitersegmenten zugeordnet sind, gebildet wird. Anders, als dies für den Trommelkommutator gemäß der DE 3150505 Al zutrifft, sind bei dem erfindungsgemäßen Trommelkommutator somit in dem den Anschlußfahnen benachbarten Bereich keine axial ausgerichteten Einschnitte, Axialnuten oder sonstigen Vertiefungen vorgesehen, die gemäß jenem Stand der Technik zur Unterteilung des Leiterrohlings in die einzelnen Leitersegmente unumgänglich sind. Die Abwesenheit entsprechender Vertiefungen wirkt sich dahingehend aus, daß der benachbart den Anschlußfahnen angeordnete Anschlußbereich des Kommutators mittels einer wirksamen Lacksperre zuverlässig von dem Kommutierungsbereich abgegrenzt werden kann. Auf diese Weise läßt sich wirksam verhindern, daß Lack, mit welchem die später an den Kommutator angeschlossene Rotorwicklung der entsprechenden elektrischen Maschine zu ihrem Schutz beschichtet wird, in den Kommutierungsbereich wandert und dort die Funktion des Kommutators beeinträchtigt. Dies gilt in entsprechender Weise für Rotoren mit gekapselter Wicklung, bei denen die Wicklung einschließlich der Anschlüsse an den Kommutator mit Kunststoff umspritzt wird. Bei der Herstellung solcher Rotoren schließt das Spritzwerkzeug, welches zum Spritzen der Kapselung eingesetzt wird, an der ringförmigen, geschlossenen, im wesentlichen kreiszylindrischen Oberfläche dicht ab, so daß ein Eindringen von Kunststoff in den Kommutierungsbereich sicher verhindert wird. Als Ergebnis hiervon ergibt sich ein praxistauglicher, den bestehenden Anforderungen genügender Trommelkommutator mit Kohlenstofflauffläche.

Im Hinblick auf die Herstellung des erfindungsgemäßen Trommelkommutators ist somit sowohl die Behandlung der Kohlenstoffhülse wie auch die Gestaltung des Leiterrohlings besonders hervorzuheben. Bei dem Leiterrohling sind gemäß Anspruch 1 zwei jeweils zueinander benachbarte Leitersegmente über je ein Brückenteil miteinander verbunden, wobei der Abstand der radialen Innenflächen der Brückenteile zur Kommutatorachse im wesentlichen dem Abstand der radialen Außenflächen der Leitersegmente zur Kommutatorachse entspricht. Die Brückenteile, welche bei dem Leiterrohling die Leitersegmente miteinander verbinden, sind, mit anderen Worten, gegenüber den Leitersegmenten radial nach außen versetzt. Dadurch, daß die radialen Innenflächen der Brückenteile im wesentlichen auf dem selben Radius zur Kommutatorachse angeordnet sind wie die radialen Außenflächen der Leitersegmente, ergibt sich eine radiale Erstreckung der zwischen jeweils zwei zueinander benachbarten Leitersegmenten gebildeten Preßstoffrippen des Trägerkörpers im wesentlichen entsprechend der radialen Erstreckung der Leitersegmente. Dies wiederum ermöglicht die Herstellung der benachbart zu den Anschlußfahnen angeordneten, ringförmigen, geschlossenen, im wesentlichen kreiszylindrischen Oberfläche mit alternierenden Preßstoffzonen und Metallzonen durch einfaches Entfernen der Brückenteile, nachdem der Trägerkörper an das aus dem Leiterrohling und der Kohlenstoffringhülse bestehende Verbundteil angespritzt worden ist. Die Brückenteile können dabei abgedreht und/oder in axialer Richtung abgestoßen bzw. abgeschert werden. Der hiermit verbundene Aufwand ist gering; und der hiermit verbundene Materialabtrag ist auf ein Minimum begrenzt. Die der Unterteilung der Kohlenstoffhülse in die einzelnen Kohlenstoffsegmente dienenden Einschnitte laufen nahe zu der den Leitersegmenten zugekehrten Stirnseite der Kohlenstoffhülse aus, so daß die (zunächst breitere) ringförmige, geschlossene, im wesentlichen kreiszylindrische Oberfläche mit alternierenden Preßstoffzonen und Metallzonen weitgehend, zumindest jedoch teilweise erhalten bleibt.

Die Behandlung der Kohlenstoffhülse durch Metallisierung der radialen Innenfläche wurde weiter oben bereits ausführlich abgehandelt. Die Dicke der Metallisierung hängt im einzelnen ab von der Dimensionierung des Kommutators. Allerdings läßt sich generell sagen, daß die Metallisierung im Hinblick auf ihre oben erläuterte doppelte Funktion relativ stark ausgeführt wird. Günstig sind je nach Dimensionierung des Kommutators Eindringtiefen der Metallisierung in die Oberfläche der Kohlenstoffhülse zwischen 10 µm und 200 µm.

Eine besonders bevorzugte Weiterbildung des erfindungsgemäßen Verfahrens zeichnet sich dadurch aus, daß die Kohlenstoffhülse vor ihrem Zusammenfügen mit dem Leiterrohling auf ihrer gesamten Oberfläche, d.h. auf beiden axialen Stirnflächen, der radialen Innenfläche wie auch der radialen Außenfläche metallisiert wird, insbesondere durch Galvanisieren. Hierdurch wird die Kohlenstoffhülse während des weiteren Herstellungsverfahrens wirksam vor Beschädigung geschützt. In einer späteren Vefahrensstufe wird dann die metallisierte Oberfläche im Bereich der die spätere Bürstenlauffläche bildenden radialen Außenfläche entfernt, beispielsweise durch Abdrehen. Auch im Bereich der beiden Stirnseiten der Kohlenstoffhülse wird die metallisierten Oberfläche bevorzugt in einem radial äußeren Ringbereich entfernt. Die Metallisierung verbleibt in diesem Falle lediglich im Bereich jener Flächen der Kohlenstoffhülse bzw. der später aus dieser hervorgehenden Kohlenstoffsegmente, die entweder mit dem Preßstoff des Trägerkörpers oder aber - über die elektrisch leitende Verbindung - mit den Leitersegmenten in Verbindung stehen.

An dieser Stelle sei darauf hingewiesen, daß der erfindungsgemäße Trommelkommutator zwar benachbart zu den Anschlußfahnen die oben erläuterte ringförmige, geschlossene, im wesentlichen kreiszylindrische Oberfläche aufweist, nicht hingegen im Kommutierungsbereich. Vielmehr sind die Kohlenstoffsegmente im Bereich der Bürstenlauffläche durch Luftspalte gegeneinander isoliert, die das Ergebnis der die Kohlenstoffhülse in die einzelnen Kohlenstoffsegmente unterteilenden Trennschnitte sind. Jene Luftspalte sind besonders bevorzugt nur von Preßmasse des Preßstoffkörpers einerseits und den angeschnittenen Flächen der Kohlenstoffsegmente andererseits begrenzt. Oder mit anderen Worten: die Trennschnitte, welche die Kohlenstoffhülse in die einzelnen Kohlenstoffsegmente unterteilen, erstrecken sich besonders bevorzugt ausschließlich in Kohlenstoff und Preßstoff, nicht hingegen in Metall des Leiterrohlings bzw. der Leitersegmente. In diesem Fall liegt in den Luftspalten kein Metall frei. Vielmehr sind die Leitersegmente in Umfangsrichtung vollständig in Preßstoff eingebettet. Die Preßstoffzonen der weiter oben erläuterten ringförmigen, geschlossenen Fläche sind somit bei dieser Weiterbildung der Erfindung in Umfangsrichtung breiter als die Luftspalte.

Der zur Herstellung des vorstehenden Kommutators zweckmäßigerweise verwendete Leiterrohling umfaßt, wie vorstehend dargelegt, eine Mehrzahl von Leitersegmenten, von denen jeweils zwei einander benachbarte über jeweils ein Brückenteil miteinander verbunden sind. Die Brückenteile sind randseitig mit den Leitersegmenten verbunden. Sie dienen der Formhaltigkeit des Leiterrohlings während des Verfahrens der Herstellung des Trommelkommutators, indem sie die vorgegebene Anordnung und Ausrichtung der Leitersegmente zueinander erhalten, bis der Trägerkörper angespritzt worden ist. Besonders bevorzugt erstrecken sich die Brückenteile über die gesamte axiale Länge der Leitersegmente. Durch diese Anordnung und Bemessung der Brückenteile ergeben sich auf beiden Stirnseiten des rohrförmigen Leiterrohlings ringförmig geschlossene Flächen, die bevorzugt in jeweils einer senkrecht zur Achse angeordneten Ebene liegen. An einer dieser ringförmig geschlossenen Flächen kann die Kohlenstoffhülse mit der zugeordneten Stirnfläche dichtend anliegen. Und die andere ringförmig geschlossene Fläche des Leiterrohlings eignet sich in hervorragender Weise als Dichtfläche für die zugeordnete Hälfte eines Spritzwerkzeugs, das beim Spritzen des Trägerkörpers aus Preßstoff eingesetzt wird. Der durch die Leitersegmente und die Brückenteile umlaufend geschlossene rohrförmige Leiterrohling schließt somit im Zusammenwirken mit der Kohlenstoffhülse und den beiden Hälften des Spritzwerkzeugs den mit Preßstoff zu füllenden Raum dicht ab.

Die rohrförmige Gestalt des Leiterrohlings ermöglicht im übrigen, daß sich die beiden Hälften des Spritzwerkzeugs im Bereich ihrer jeweiligen Dichtfläche mit dem Leiterrohling bzw. der Kohlenstoffhülse exakt gegenüberstehen. Dies ist besonders günstig im Hinblick auf die hohen Schließkräfte. Denn diese werden von dem Leiterrohling und der Kohlenstoffhülse ohne unzulässig hohe Spannungen und gegebenenfalls Verformungen aufgenommen. Die Schließkräfte rufen in dem rohrförmigen Leiterrohling und der Kohlenstoffhülse im wesentlichen alleine Druckspannungen hervor.

Das vorstehend erläuterte Verhältnis der aus dem Leiterrohling und der Kohlenstoffhülse zusammengefügten Einheit zum Spritzwerkzeug insbesondere hinsichtlich der Dichtflächen schließt nicht aus, daß jene Hälfte des Spritzwerkzeuges, die an der freien Stirnfläche der Kohlenstoffhülse dichtend anliegt, ergänzend auch an dem Leiterrohling anliegt, soweit dieser radial über die Kohlenstoffhülse vorsteht. Namentlich kann die betreffende Hälfte des Spritzwerkzeugs an den Stirnflächen der Brückenteile anliegen und beim Schließen des Spritzwerkzeugs zu einer definierten Stauchung des Leiterrohlings in axialer Richtung beitragen.

Bevorzugt ist die Wandstärke der weiter oben erläuterten Brückenteile benachbart zu den Leitersegmenten erheblich geringer als zwischen jeweils zwei Leitersegmenten. Dies reicht aus, um die Formhaltigkeit des Leiterrohlings zu gewährleisten und dem beim Spritzen des Trägerkörpers aus Preßstoff bestehenden Druck standzuhalten. Die geringe Wandstärke der Brückenteile an ihren beiden Endbereichen erleichtert das spätere, nach dem Formen des Trägerkörpers erfolgende Entfernen der Brückenteile.

Die vorstehend erläuterte Anordnung und Bemessung der Brückenteile ermöglicht, daß diese durch Abscheren bzw. Abstoßen in axialer Richtung entfernt werden. Dies ist namentlich von Bedeutung, wenn sich die Brückenteile, wie weiter oben dargelegt, zur Bildung eines rohrförmigen Leiterrohlings über die gesamte axiale Länge der Leitersegmente erstrecken und wenn die Anschlußfahnen radial von den Leitersegmenten abstehen. Denn ein Abdrehen der Brückenteile ist zwischen solchermaßen radial abstehenden Anschlußfahnen naturgemäß nicht möglich.

Eine bevorzugte Weiterbildung des erfindungsgemäßen Trommelkommutators zeichnet sich dadurch aus, daß die Leitersegmente jeweils einen dickwandigen Anschlußbereich mit einer Anschlußfahne, einen das zugeordnete Kohlenstoffsegment kontaktierenden dickwandigen Kontaktbereich und einen zwischen dem Anschlußbereich und dem Kontaktbereich angeordneten dünnwandigen Übergangsbereich aufweisen. Von wesentlicher Bedeutung für den dergestalt weitergebildeten Trommelkommutator ist somit mit anderen Worten, daß die Leitersegmente nicht mit einer überall mehr oder weniger gleichen Wandstärke ausgeführt sind, sondern daß sich vielmehr die Wandstärken verschiedener Bereiche der Leitersegmente signifikant voneinander unterscheiden, indem nämlich zwischen dem Anschlußbereich, der dem Anschluß der Rotorwicklung dient, und dem Kontaktbereich, über den die elektrisch leitende Verbindung des Leitersegments mit dem zugeordneten Kohlenstoffsegment hergestellt wird, ein vergleichsweise dünnwandiger Übergangsbereich besteht. In diesem Sinne ist die - senkrecht zur Wärmeflußrichtung von den Anschlußfahnen zu den Kontaktzonen bestimmte - Wandstärke des Übergangsbereichs geringer als die - in radialer Richtung gemessene - Wandstärke des Anschlußbereichs und die - im allgemeinen in axialer Richtung gemessene - Wandstärke des Kontaktbereichs des betreffenden Leitersegments, wobei der Anschlußbereich zudem auch in axialer und in Umfangsrichtung vergleichsweise groß dimensioniert ist (siehe unten). Eine derartige Gestaltung der Leitersegmente begünstigt, daß auch bei äußerst kompakten, kleinste Abmessungen aufweisenden Trommelkommutatoren das Anschweißen der Wicklungsdrähte an die Anschlußbereiche der Leitersegmente nicht zu einer überhitzungsbedingten Schädigung der elektrisch leitenden Verbindungen der Leitersegmente mit den Kohlenstoffsegmenten führt. Denn die dickwandigen Anschlußbereiche der Leitersegmente bilden aufgrund ihrer hohen Wärmekapazität eine erste Wärmesenke für die beim Schweißvorgang entwickelte Wärme. Der dünnwandige Übergangsbereich vom Anschlußbereich zum Kontaktbereich bildet demgegenüber aufgrund seiner - normal zum Wärmefluß ausgerichteten - geringen Querschnittsfläche für die Wärmeleitung vom Anschlußbereich zum Kontaktbereich des Leitersegments einen erheblichen Widerstand. Und der dickwandige Kontaktbereich bildet wiederum eine ausgeprägte Wärmesenke für die (ohnehin reduzierte) durch den Übergangsbereich hindurchgeleitete Wärmeenergie. Das Ergebnis ist, daß sich der Kontaktbereich der Leitersegmente beim Anschweißen der Drähte der Rotorwicklung an die Leitersegmente in einem besonders geringen Maße erwärmt. In Anwendung dieser Weiterbildung der vorliegenden Erfindung ist selbst bei Einsatz herkömmlicher Schweißverfahren die Gefahr, daß die elektrisch leitenden Verbindungen der Kohlenstoffsegmente mit den Leitersegmenten beim Anschweißen der Rotorwicklung an den Trommelkommutator beschädigt werden, minimal. Es lassen sich die Kohlenstoffsegmente sogar durch Weichlöten zuverlässig und dauerhaft mit den Leitersegmenten elektrisch verbinden, da die an der Kontaktstelle auftretenden Temperaturen zuverlässig unterhalb des Erweichungspunktes für Weichlot liegen. Dies gilt selbst für extrem kompakte Trommelkommutatoren.

Zur Klarstellung sei darauf hingewiesen, daß die Angabe, wonach der Übergangsabschnitt "dünnwandig" ausgeführt sein soll, nicht einschränkend dahingehend verstanden werden darf, daß der Anschlußbereich mit dem Kontaktbereich über ein Wandteil verbunden ist. Vielmehr ist unter "dünnwandig" zu verstehen, daß der zur Wärmeleitung zur Verfügung stehende, sich senkrecht zur Wärmeflußrichtung erstreckende Querschnitt zwischen dem Anschlußbereich und dem Kontaktbereich geringer ist als im Anschlußbereich bzw. im Kontaktbereich. Insoweit bildet auch eine Querschnittseinschnürung einen "dünnwandigen" Übergangsbereich im Sinne der vorliegenden Erfindung, wie sich insbesondere auch aus der Beschreibung eines bevorzugten Ausführungsbeispiels weiter unten im Detail ergibt.

Die weiter oben erläuterte, gemäß der vorliegenden Erfindung vorgesehene Metallisierung der Kohlenstoffhülse im Bereich der radialen Innenfläche führt zu einer großflächigen Stromeinleitung in die nicht metallisierten Bereiche der Kohlenstoffsegmente. Verglichen mit solchen Bauweisen, bei denen die Stromeinleitung in die Kohlenstoffsegmente ausschließlich im Bereich von deren elektrisch leitender Verbindung mit den Leitersegmenten erfolgt, eröffnet dies die Möglichkeit, jene Bereiche der elektrisch leitenden Verbindung der Leitersegmente mit den Kohlenstoffsegmenten vergleichsweise klein auszuführen und an einer herstellungs- und wärmetechnisch optimierten Stelle anzuordnen. Eine solchermaßen reduzierte Ausdehnung der Fläche der elektrisch leitenden Verbindung zwischen den Leitersegmenten und den Kohlenstoffsegmenten verringert die nachteiligen Auswirkungen der temperaturbedingten Ausdehnung und anschließenden Schrumpfung der Leitersegmente beim Anschweißen der Rotorwicklung. Insoweit bestehen wiederum positive Auswirkungen auf die Dauerhaftigkeit jener elektrisch leitenden Verbindung und die Betriebssicherheit des Trommelkommutators.

In dem vorstehend dargelegten Sinne sind die elektrisch leitenden Verbindungen zwischen den Leitersegmenten und den Kohlenstoffsgmenten möglichst weit entfernt von den Anschlußfahnen im Bereich der radial inneren Abschnitte der Leitersegmente angeordnet. Insbesondere kann sich dabei die jeweilige elektrisch leitende Verbindung auf den Bereich der einander gegenüberstehenden, aneinander anliegenden Ankerabschnitte der Leitersegmente und der Kohlenstoffsegmente (siehe unten) beschränken.

Der gemäß der weiter oben erläuterten Weiterbildung der Erfindung vorgesehene dünnwandige Übergangsbereich zwischen dem Anschlußbereich und dem Kontaktbereich eines jeden Leitersegments wirkt sich im übrigen nicht allein durch sein Wärmeleitverhalten bzw. seinen Wärmeleitwiderstand (siehe oben) als vorteilhaft aus. Hervorzuheben ist des weiteren die durch die dünnwandigen Übergangsbereiche - während der Herstellung des Trommelkommutators - bereitgestellte axiale Nachgiebigkeit bzw. Stauchbarkeit der Leitersegmente. Eine solche Stauchbarkeit (z. B. um bis zu 2 %) ist günstig im Hinblick auf eine zuverlässige Abdichtung des zum Spritzen des Trägerkörpers verwendeten Spritzwerkzeugs. Im übrigen lassen sich hierdurch Fertigungstoleranzen ausgleichen. Der Kommutator kann auf diese Weise unabhängig von Toleranzen, die bei der wirtschaftlichen Herstellung der Kohlenstoffhülse und des Leiterrohlings unvermeidbar sind, in dem Spritzwerkzeug exakt auf sein Sollmaß gefertigt werden. Die wirksame Begrenzung des auf die Kohlenstoffhülse wirkenden Druckes reduziert die Gefahr einer Beschädigung der Kohlenstoffhülse während der Herstellung des Trommelkommutators und trägt auf diese Weise zu einer Reduzierung des Ausschusses bei. Die vorliegende Erfindung ermöglicht auch, daß die Kohlenstoffsegmente aus vergleichsweise weichem kunststoffgebundenem Kohlenstoff bestehen; dies wirkt sich besonders günstig auf die Standzeit des Kommutators aus.

Gemäß einer - vorstehend bereits kurz angesprochenen - weiteren bevorzugten Weiterbildung der Erfindung ist vorgesehen, daß die Übergangsbereiche der Leitersegmente entfernt von den Kohlenstoffsegmenten an die Kontaktbereiche der Leitersegmente angeschlossen sind. Auf diese Weise entsteht zwischen den Anschlußbereichen und gegebenenfalls den Übergangsbereichen der Leitersegmente einerseits und den Kohlenstoffsegmenten andererseits jeweils ein Spalt, der mit einer Preßstoffschicht ausgefüllt ist. Der Anschluß der Übergangsbereiche an die Kontaktbereiche entfernt von der jeweiligen Kontaktzone zwischen dem betreffenden Leitersegment und dem zugeordneten Kohlenstoffsegment wirkt sich in einer nochmals reduzierten Wärmeübertragung von den Anschlußbereichen der Leitersegmente auf die Kohlenstoffsegmente aus. Die Wirkung der Preßstoffschicht besteht überdies in einem verbesserten Schutz der elektrisch leitenden Verbindungen zwischen den Kontaktbereichen der Leitersegmente und den Kohlenstoffsegmenten gegenüber aggressiven Medien sowie einem Schutz gegen direkte Überhitzung der Kohlenstoffhülsen beim Anschweißen der Rotorwicklung an die Leitersegmente.

Im Rahmen der vorliegend erläuterten Weiterbildung der Erfindung besteht hinsichtlich der Orientierung der Übergangsbereiche eine Gestaltungsbreite. Unter wärmetechnischen Gesichtspunkten können die Übergangsbereiche insbesondere radial wie auch axial orientiert sein, wobei auch beliebige diagonale Zwischenwerte denkbar sind.

Im Hinblick auf die bevorzugt vorgesehenen, vorstehend erläuterten unterschiedlichen Wandstärken der Leitersegmente in ihren verschiedenen Bereichen erweist sich die Herstellung eines Leiterrohlings, wie er zur Herstellung des erfindungsgemäßen Trommelkommutators eingesetzt wird, durch ein kombiniertes Fließpreß- und Stanzverfahren als besonders günstig. Zunächst wird durch Fließpressen ein napfartiger Grundkörper hergestellt, der sich bereits durch dickwandige Anschlußbereiche, dünnwandige Übergangsbereiche und wiederum dickwandige Kontaktbereiche auszeichnet, wobei die Kontaktbereiche und ggf. auch die Übergangsbereiche noch untereinander unter Bildung eines geschlossenen Ringes verbunden sind. Durch Stanzen wird danach der Boden des Grundkörpers segmentiert.

Die idealen Abmessungen der einzelnen Bereiche der Leitersegmente, insbesondere die verschiedenen Wandstärken und deren Relation zueinander, hängen von unterschiedlichen Einflußgrößen ab. Jedoch zeigt sich bereits in dem Falle, daß die senkrecht zur Wärmeflußrichtung ausgerichtete Querschnittsfläche der Übergangsbereiche der Leitersegmente weniger als 80% der - ebenfalls senkrecht zur Wärmeflußrichtung ausgesrichteten - Querschnittsfläche der Kontaktbereiche beträgt, eine signifikant hohe Lebensdauer der elektrisch leitenden Verbindungen zwischen den Kohlenstoffsegmenten und den Leitersegmenten. Besonders bevorzugt ist der Querschnittsunterschied noch größer, indem der Querschnitt der Übergangsbereiche der Leitersegmente weniger als 60 % des Querschnitts der Kontaktbereiche beträgt. Dies vergrößert, sofern flach ausgeführte Übergangsbereiche entfernt von den Kohlenstoffsegmenten an die Kontaktbereiche der Leitersegmente angeschlossen sind, den Abstand der Übergangsbereiche der Leitersegmente zu den Kohlenstoffsegmenten.

Eine andere bevorzugte Weiterbildung der Erfindung ist dadurch gekennzeichnet, daß die Anschlußfahnen endseitig abgeschrägt sind. Eine derartige, der äußeren Umfangsfläche des zugeordneten Leitersegments zugewandte Abschrägung führt zu einer Verringerung der Kontaktfläche zwischen den an die Leitersegmente herangebogenen Anschlußfahnen und den Leitersegmenten nahe der Verbindung zu den Kohlenstoffsegmenten. Dies ist wiederum günstig im Hinblick auf eine möglichst geringe Übertragung der beim Schweißen der Drähte der Rotorwicklung an die Leitersegmente entstehenden Wärme auf die elektrisch leitenden Verbindungen im Bereich der Kontaktzonen zwischen den Leitersegmenten und den Kohlenstoffsegmenten.

Für die gemäß der vorliegenden Erfindung vorgesehene Metallisierung der Kohlenstoffhülse eignen sich als solches bekannte galvanische Verfahren. In diesem Falle wird zweckmäßigerweise die Kohlenstoffhülse auf ihrer gesamten Oberfläche metallisiert (s.o.). Denkbar ist allerdings auch die Metallisierung der Kohlenstoffhülse durch Hochdruckverpressen von Metallpartikeln, insbesondere von - ggf. versilbertem - Cu- oder Ag-Pulver, mit anschließendem Versintern.

Im Hinblick auf eine besonders zuverlässig und langlebige Ausführung des erfindungsgemäßen Trommelkommutators sind dessen Kohlenstoffsegmente und Leitersegmente besonders bevorzugt durch sich radial nach innen erstreckende Ankerabschnitte, die unter Ausbildung von Hinterschneidungen in den Trägerkörper eingebettet sind, in letzterem verankert. Die Ankerabschnitte der Kohlenstoffsegmente einerseits und der Leitersegmente andererseits brauchen keinesfalls denselben Querschnitt aufzuweisen. Besonders günstig ist es dabei, wenn die Ankerabschnitte der Leitersegmente einen geringfügig reduzierten Querschnitt aufweisen gegenüber den Ankerabschnitten der Kohlenstoffsegmente.

Die Ankerabschnitte der Kohlenstoffsegmente weisen durch die weiter oben erläuterte Metallisierung der Kohlenstoffhülse auf ihrer radialen Innenfläche einem Metallmantel auf, der im Falle einer Metallisierung beider Stirnseiten der Kohlenstoffhülse sogar die Ankerabschnitte vollständig umschließt.

Die Ankerabschnitte der Kohlenstoffsegmente erstrecken sich besonders bevorzugt über deren gesamte axiale Länge. Demgegenüber können sich die Ankerabschnitte der Leitersegmente auf den den Kontaktzonen benachbarten Bereich beschränken. Zur Optimierung der Verankerung der Leitersegmente in dem Trägerkörper können weitere an den Leitersegmenten vorgesehene Klauen dienen. In diesem Sinne können insbesondere die Ankerabschnitte der Leitersegmente in Klauen übergehen, welche im wesentlichen axial ausgerichtet sind. Weitere Halteklauen sind bevorzugt innen an den Leitersegmenten benachbart der der Kontaktzone gegenüberliegenden Stirnseite des Leiterrohlings vorgesehen.

Aus den vorstehenden Erläuterungen der vorliegenden Erfindung ist ersichtlich, daß diese einen Trommelkommutator mit bisher nicht bekannten Eigenschaften bereitstellt. Insbesondere zeichnet sich der erfindungsgemäße Trommelkommutator bei geringen Herstellkosten durch eine insbesondere durch die hohe Stabilität begründete überragende Qualität aus, wobei besonders geringe Abmessungen möglich sind. Zudem kann das Spritzwerkzeug besonders einfach aufgebaut sein. Der Leiterrohling kann darüber hinaus innen und außen eine durchgehende Kontur aufweisen, so daß er sich in eine Matrize einlegen läßt.

Im Folgenden wird die vorliegende Erfindung anhand zweier in der Zeichnung veranschaulichter bevorzugter Ausführungsbeispiele näher erläutert. Dabei zeigt
- Fig. 1: eine erste bevorzugte Ausführungsform eines Trommelkommutators nach der vorliegenden Erfindung in perspektivischer Ansicht,
- Fig. 2: einen Längsschnitt durch den Trommelkommutator gemäß Fig. 1,
- Fig. 3: den zur Herstellung des Trommelkommutators gemäß Fig. 1 verwendeten Leiterrohling in perspektivischer Ansicht,
- Fig. 4: den Leiterrohling gemäß Fig. 3 in einer anderen Ansicht,
- Fig. 5: die zur Herstellung des Trommelkommutators gemäß Fig. 1 verwendete Kohlenstoffhülse in perspektivischer Ansicht,
- Fig. 6: die Kohlenstoffhülse gemäß Fig. 5 in einer anderen Ansicht,
- Fig. 7: die aus dem Leiterrohling gemäß den Fig. 3 und 4 und der an dieser stirnseitig angelöteten Kohlenstoffhülse gemäß den Fig. 5 und 6 gebildete Einheit in perspektivischer Ansicht,

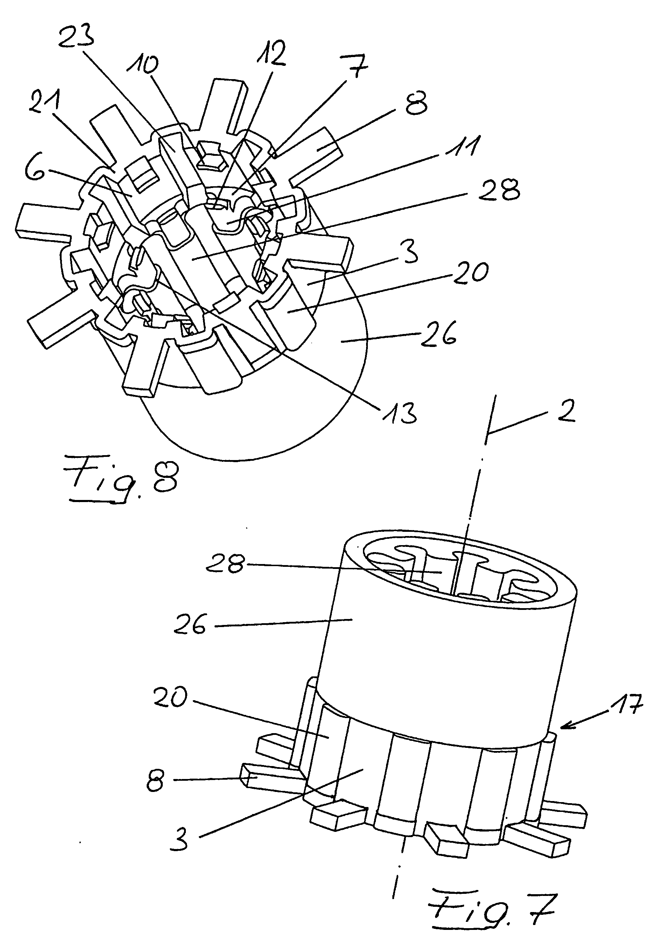

- Fig. 8: die Einheit gemäß Fig. 7 in einer anderen Ansicht,
- Fig. 9: eine zweite bevorzugte Ausführungsform eines Trommelkommutators nach der vorliegenden Erfindung in perspektivischer Ansicht,
- Fig. 10: einen Längsschnitt durch den Trommelkommutator gemäß Fig. 9 und
- Fig. 11: einen weiteren Längsschnitt durch den Trommelkommutator gemäß Fig. 9 in einer anderen Axialebene als Fig. 10.

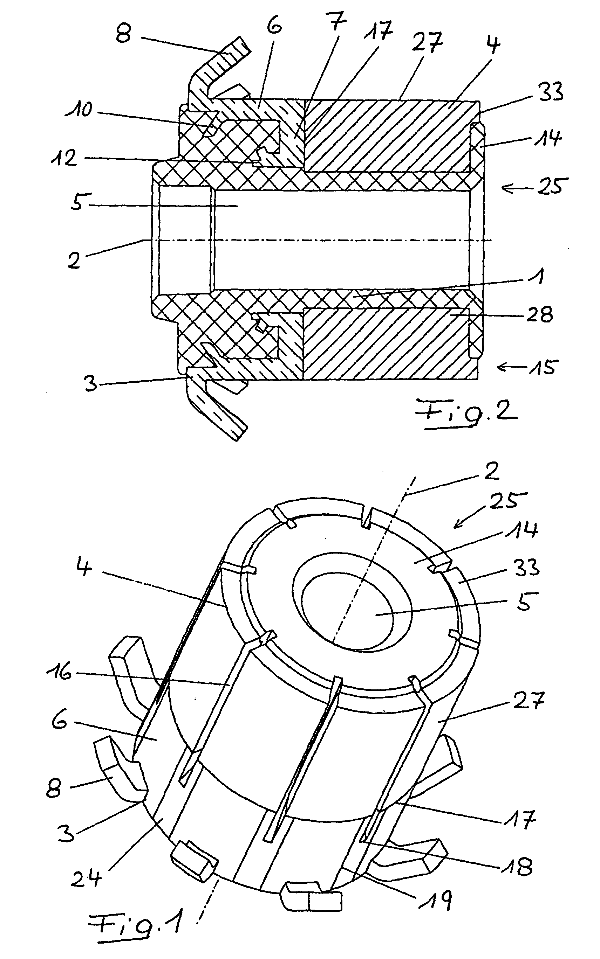

Der in den Fig. 1 und 2 veranschaulichte Trommelkommutator umfaßt einen aus isolierendem Preßstoff gefertigten Trägerkörper 1, acht gleichmäßig um die Achse 2 herum verteilt angeordnete metallische Leitersegmente 3 und acht Kohlenstoffsegmente 4, von denen jedes mit jeweils einem Leitersegment 3 elektrisch leitend verbunden ist. Der Trägerkörper 1 weist eine zentrische Bohrung 5 auf. In diesem Umfang entspricht der Trommelkommutator gemäß den Fig. 1 und 2 dem Stand der Technik gemäß der DE 3150505 A1, so daß der grundsätzliche Aufbau nicht detaillierter erläutert zu werden braucht.

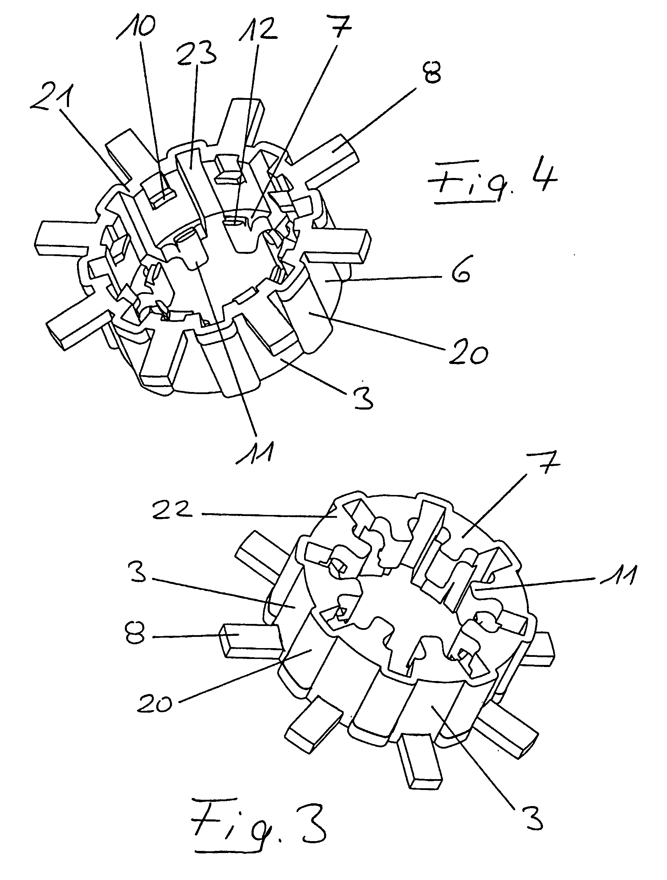

Die aus Kupfer bestehenden Leitersegmente 3 sind, wie weiter unten detailliert erläutert wird, aus dem in den Fig. 3 und 4 dargestellten Leiterrohling hervorgegangen. Sie umfassen zwei Hauptbereiche, nämlich den Anschlußbereich 6 und den Kontaktbereich 7. An jedem der Anschlußbereiche 6 ist eine Anschlußfahne 8 angeordnet. Diese dient der elektrisch leitenden Verbindung eines Wicklungsdrahts mit dem betreffenden Leitersegment 3. Die Anschlußfahnen 8 können endseitig eine Abschrägung aufweisen, und zwar an jener Fläche, die bei dem fertigen Trommelkommutator radial nach innen weist und dem zugeordneten Anschlußbereich 6 des betreffenden Leitersegments 3 benachbart ist.

Zur besseren Verankerung der Leitersegmente 3 in dem Trägerkörper 1 steht von den Anschlußbereichen 6 jedes Leitersegments 3 schräg nach innen eine Halteklaue 10 vor. Zu dem selben Zweck sind die radial inneren Enden der Kontaktbereiche 7 der Leitersegmente 3 zu Ankerabschnitten 11 geformt. Die Ankerabschnitte 11 sind bei dem fertigen Trommelkommutator in die Preßstoffmasse des Trägerkörpers 1 eingebettet; sie erweiteren sich in Richtung auf die Kommutatorachse 2, so daß sich eine Hinterschneidung der Ankerabschnitte 11 in dem Trägerkörper 1 ergibt. Die Akerabschnitte 11 gehen in weitere, gegabelte Halteklauen 12 über.

Die Kontaktbereiche 7 der Leitersegmente 3 liegen vollflächig an stirnseitigen Kontaktflächen 13 der Kohlenstoffsegmente 4 an. Im Bereich der auf diese Weise definierten Kontaktzonen sind die Kohlenstoffsegmente 4 mit den zugeordneten Leitersegmenten 3 durch Löten elektrisch leitend verbunden.

Der Trägerkörper 1 umfaßt einen Bund 14, der die freien Stirnseiten 15 der Kohlenstoffsegmente 4 in einem radial inneren Bereich überdeckt und über die Kohlenstoffsegmente geringfügig axial vorsteht. Zur Aufnahme des Bundes 14 des Trägerkörpers 1 sind die freien Stirnseiten 15 der Kohlenstoffsegmente gestuft ausgeführt.

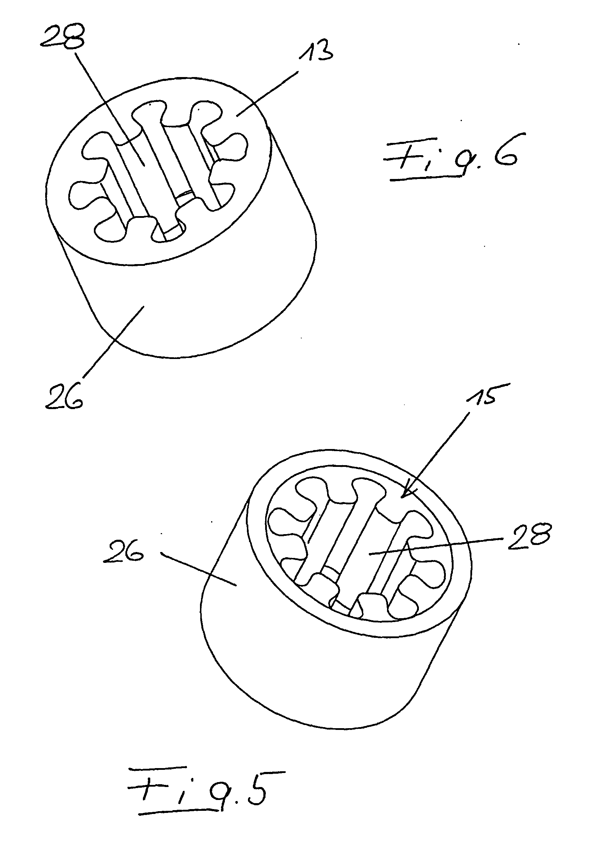

Die Axialschnitte 16, mit denen im Rahmen der Herstellung des Plankommutators die zunächst einstückige Kohlenstoffhülse (vgl. Fig. 5 und 6) in die einzelnen Kohlenstoffsegmente 4 unterteilt wurde, sind ebenfalls dargestellt. Die Axialschnitte 16 erstrecken sich in radialer Richtung bis in den Trägerkörper 1 hinein, so daß die zunächst einstückige Kohlenstoffhülse in acht zuverlässig gegeneinander isolierte Kohlenstoffsegmente unterteilt wird. In axialer Richtung erstrecken sich die Axialschnitte nicht über die gesamte axiale Länge des Trommelkommutators. Vielmehr laufen die Axialschnitte 16 benachbart der Kontaktzone 17, in welcher die Kohlenstoffsegmente 4 und die Leitersegmente 3 miteinander verbunden sind, aus. Hierdurch ergibt sich in dem Bereich zwischen dem Auslauf 18 der Axialschnitte 16 und den Anschlußfahnen 8 eine ringförmige, geschlossene, kreiszylindrische Oberfläche 19 mit alternierenden Preßstoffzonen des Trägerkörpers 1 und Metallzonen der Leitersegmente 3.

Die Fig. 3 und 4 veranschaulichen den zur Herstellung des Trommelkommutators gemäß den Fig. 1 und 2 verwendeten Leiterrohling in zwei unterschiedlichen perspektivischen Ansichten. Viele Details des Leiterrohlings ergeben sich unmittelbar aus der vorstehenden Erläuterung der Fig. 1 und 2; insoweit wird Bezug genommen auf die vorstehenden Ausführungen. Ein wichtiges Merkmal des Leiterrohlings ist seine am Umfang vollständig geschlossene rohrförmige Gestalt. Zwischen jeweils zwei Anschlußbereichen 6 besteht ein Brückenteil 20. Die Brückenteile 20 und die Anschlußbereiche 6 der Leitersegmente 3 weisen dieselbe axiale Erstreckung auf und sind längs ihrer gesamten axialen Erstreckung miteinander verbunden. Hierdurch ergeben sich auf beiden Stirnseiten des Leiterrohlings geschlossene ringförmige Flächen 21 und 22, die sich abwechselnd aus den Stirnflächen der Leitersegmente 3 und der Brückenteile 20 zusammensetzen. Dies ist, wie weiter oben erläutert, von besonderem Vorteil für einen dichten Abschluß des Preßwerkzeugs einerseits und der Kohlenstoffhülse andererseits am Leiterrohling, wobei die im Hinblick auf die extrem hohen Spritzdrücke erforderlichen hohen Schließkräfte nicht zu einer schädlichen Verformung des Leiterrohlings führen.

Die Verbindungen der Brückenteile 20 mit den Leitersegmenten 3 sind - durch entsprechende Dimensionierung der Nuten 23 - relativ dünnwandig ausgeführt. Dies gestattet, daß die Brückenteile 20, nachdem der Trägerkörper 1 angespritzt worden ist, ganz oder zumindest teilweise durch Stoßen bzw. Abscheren in axialer Richtung in einem einzigen Arbeitsgang entfernt werden können. Hierzu ist im übrigen vorgesehen, daß der Abstand der radial inneren Umfangsflächen der Brückenteile 20 zur Kommutatorachse 2 im wesentlichen dem Abstand der radial äußeren Umfangsflächen der Anschlußbereiche 6 der Leitersegmente 3 zur Kommutatorachse 2 entspricht. Die Nuten 23 werden beim Spritzen des Trägerkörpers 1 unter Ausbildung korrespondierender Preßstoffrippen 24 mit Preßstoff gefüllt. Jene Preßstoffrippen 24 werden durch späteres Entfernen der Brückenteile 20 (siehe oben) freigelegt. Die radialen Außenflächen der Preßstoffrippen 24 bilden zusammen mit den radialen Außenflächen der Leitersegmente 3 den ringförmigen, geschlossenen, kreiszylindrischen Bereich mit alternierenden Preßstoffzonen und Metallzonen, wie er weiter oben eingehend erläutert worden ist.

Auch von der in den Fig. 5 und 6 veranschaulichten Kohlenstoffhülse sind wesentliche Details bereits den Erläuterungen zu dem in den Fig. 1 und 2 gezeigten fertigen Trommelkommutator entnehmbar. Insoweit wird auf die entsprechenden Ausführungen Bezug genommen. Gut erkennbar ist in Fig. 5 die gestufte Ausführung derjenigen Stirnseite der Kohlenstoffhülse, die bei dem fertigen Trommelkommutator die freie Stirnseite 25 bildet. Die gegenüberliegende, in Fig. 6 gezeigte Stirnseite der Kohlenstoffhülse ist demgegenüber eben ausgeführt. Dies ist die Stirnseite, an der der Leiterrohling angelötet wird. Die Umfangsfläche 26 der Kohlenstoffhülse bildet die spätere Bürstenlauffläche 27 des fertigen Trommelkommutators.

Die innere Umfangsfläche der Kohlenstoffhülse ist verzahnungsartig ausgeführt, indem hier Ankerabschnitte 28 radial nach innen vorspringen. Die Ankerabschnitte 28 erstrecken sich über die gesamte axiale Länge der Kohlenstoffhülse. Die Ankerabschnitte 28 sind bei dem fertigen Trommelkommutator in die Preßstoffmasse des Trägerkörpers 1 eingebettet; sie erweitern sich in Richtung auf die Kommutatorachse 2, so daß sich eine Hinterschneidung der Ankerabschnitte 28 in dem Trägerkörper 1 ergibt.

Die in den Fig. 5 und 6 veranschaulichte Kohlenstoffhülse wird vor ihrem Verbinden mit dem Leiterrohling sowohl an der diesem zugewandten Stirnfläche wie auch an der inneren Umfangsfläche metallisiert, beispielsweise durch Einpressen von Metallpulver in die Oberfläche und anschließendes Versintern, oder aber durch Galvanisieren.

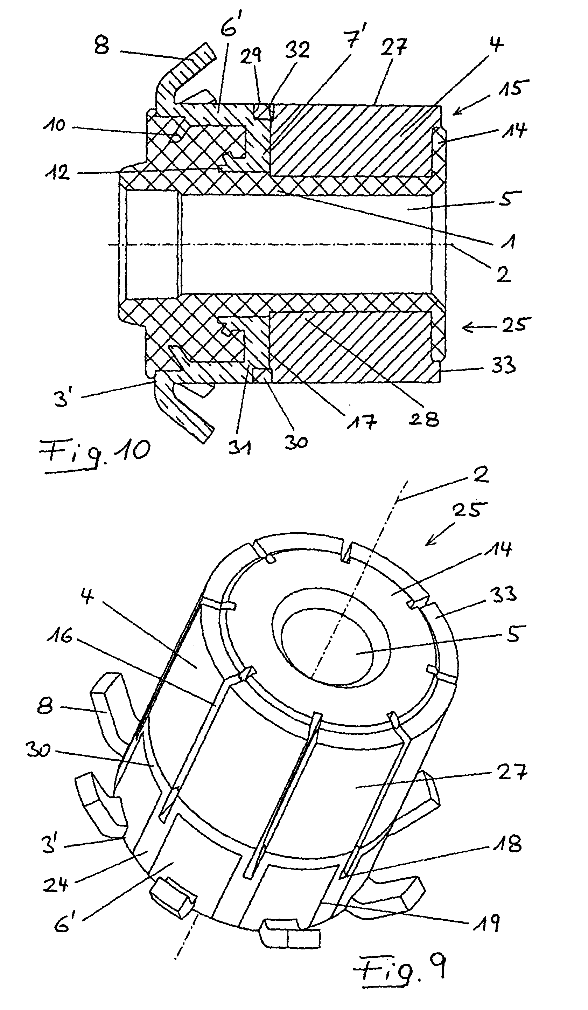

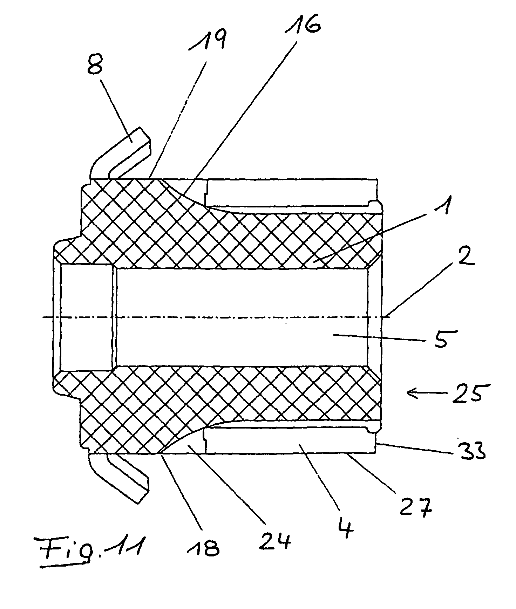

Der Trommelkommutator gemäß den Fig. 9, 10 und 11 unterscheidet sich von demjenigen gemäß den Fig. 1 und 2 in erster Linie durch eine modifizierte Ausführung der Leitersegmente 3'. Diese weisen am äußeren Umfang benachbart der Kontaktzone 17 eine sich in Umfangsrichtung erstreckende Aussparung 29 auf. Diese Aussparung 29 bewirkt eine Differenzierung der Leitersegmente 3' in drei Hauptbereiche, nämlich den Anschlußbereich 6', den Kontaktbereich 7' und den Übergangsbereich 31, der den Kontaktbereich 7' mit dem Anschlußbereich 6' verbindet. Der Übergangsbereich 31 ist bei diesem Ausführungsbeispiel schräg zur Kommutatorachse 2 angeordnet.

Von besonderer Bedeutung ist dabei die Dimensionierung der Leitersegmente 3' in ihren verschiedenen Abschnitten. Während die - in radialer Richtung gemessene - Dicke der Anschlußbereiche 6' und die - in axialer Richtung gemessene Dicke der Kontaktbereiche 7' groß ist, ist der Querschnitt der Übergangsbereiche 31 senkrecht zur Wärmeflußrichtung innerhalb des Leiterrohlings besonders klein; die Übergangsbereiche 31 sind, mit anderen Worten, zur Bildung eines Wärmewiderstands besonders dünnwandig ausgeführt. Die Übergangsbereiche 31 sind entfernt von den Kohlenstoffsegmenten 4 an die Kontaktbereiche 7' angeschlossen, so daß keine Berührung besteht zwischen den Anschlußbereichen 6' und den Übergangsbereichen 31 der Leitersegmente 3' einerseits und den Kohlenstoffsegmenten 4' andererseits.

Vor dem Spritzen des Trägerkörpers 1 ist die dem Leiterrohling zugewandte, zunächst ebene Stirnfläche der Kohlenstoffhülse in einem radial äußeren Ringbereich zur Entfernung der dort zunächst vorhandenen Oberflächenmetallisierung unter Bildung einer Stufe 32 abgedreht worden. Insoweit erstreckt sich die beim Spritzen des Trägerkörpers 1 gebildete Preßstoffrippe 30 nicht nur in die Aussparung 29 des Leiterrohlings hinein, sondern auch in die entsprechende Stufe 32 der Kohlenstoffhülse. Die elektrisch leitende Verbindung zwischen den Leitersegmenten 3 und den Kohlenstoffsegmenten 4 beschränkt sich auf den radial innen liegenden Bereich, in dem die Ankerabschnitte 11 der Leitersegmente 3 an den Ankerabschnitten 28 der Kohlenstoffsegmente 4 aneinander anliegen.

Wie dies auch für den Trommelkommutator gemäß den Fig. 1 und 2 zutrifft, überdeckt der Bund 14 des Trägerkörpers bei dem in den Fig. 9, 10 und 11 veranschaulichten Trommelkommutator die Stirnseite 15 der Kohlenstoffsegmente nur in einem radial inneren Bereich. Im Ringbereich 33 und im Bereich der Bürstenlauffläche 27 ist die zunächst vorhandene Oberflächenmetallisierung abgedreht worden. Das Spritzwerkzeug, das zum Spritzen des Trägerkörpers 1 eingesetzt wird, liegt dichtend an der Stirnseite der Kohlenstoffhülse in dem Ringbereich 33 an.

## Patentansprüche

1. Verfahren zur Herstellung eines Trommelkommutators, umfassend einen aus isolierendem Preßstoff gefertigten hülsenförmigen Trägerkörper (1), eine Mehrzahl von metallischen Leitersegmenten (3, 3') und eine ebenso große Anzahl von Kohlenstoffsegmenten (4), welche mit den Leitersegmenten (3, 3') elektrisch leitend verbunden sind, umfassend die folgenden Schritte:
- Herstellen eines metallischen Leiterrohlings umfassend eine Mehrzahl von Leitersegmenten, von denen jeweils zwei zueinander benachbarte über ein Brückenteil (20) miteinander verbunden sind, wobei der Abstand der radialen Innenflächen der Brückenteile (20) zur Kommutatorachse (2) im wesentlichen dem Abstand der radialen Außenflächen der Leitersegmente (3, 3') zur Kommutatorachse (2) entspricht;
- Herstellen einer Kohlenstoffhülse mit einer im wesentlichen kreiszylindrischen Außenfläche (26) wobei zumindest die radiale Innenfläche und eine axiale Stirnfläche der Kohlenstoffhülse metallisiert sind;
- Zusammenfügen des Leiterrohlings mit der Kohlenstoffhülse in axialer Richtung unter Ausbildung elektrisch leitender Kontaktzonen (17) zwischen den Leitersegmenten (3, 3') und der metallisierten Stirnfläche der Kohlenstoffhülse;
- Anspritzen eines aus isolierendem Preßstoff bestehenden Trägerkörpers (1) an das aus dem Leiterrohling und der Kohlenstoffhülse bestehende Verbundteil in einem Spritzwerkzeug, wobei die metallisierte radiale Innenfläche der Kohlenstoffhülse mit Preßstoff überdeckt wird;
- Entfernen der Brückenteile (20) unter Ausbildung einer ringförmigen, geschlossenen im wesentlichen kreiszylindrischen Oberfläche (19) mit alternierenden Preßstoffzonen und Metallzonen;
- Bildung der Kohlenstoffsegmente (4) durch Einschneiden der Kohlenstoffhülse durch axiale, in radialer Richtung bis zum Trägerkörper (1) reichende Axialschnitte (16), die in zwischen jeweils zwei Leitersegmenten (3, 3') angeordneten Axialebenen verlaufen, wobei die ringförmige, geschlossene im wesentlichen kreiszylindrische Oberfläche (19) mit alternierenden Preßstoffzonen und Metallzonen zumindest teilweise erhalten bleibt.

2. Verfahren nach Anspruch 1,
**dadurch gekennzeichnet,**
**daß** die Axialschnitte (16), mit denen die Kohlenstoffhülse in Kohlenstoffsegmente (4) unterteilt wird, nur durch Kohlenstoff und Preßmasse, nicht hingegen durch Metall des Leiterrohlings bzw. der Leitersegmente (3, 3') geführt werden.

3. Verfahren nach Anspruch 1 oder Anspruch 2,
**dadurch gekennzeichnet,**
**daß** die Leitersegmente (3, 3') im wesentlichen radial abstehende Anschlußfahnen (8) aufweisen, wobei die sich über die gesamte axiale Länge des Leiterrohlings erstrekkenden Brückenteile (20) zumindest teilweise durch axiales Abscheren entfernt werden.

4. Verfahren nach einem der Ansprüche 1 bis 3,
**dadurch gekennzeichnet,**
**daß** die elektrisch leitende Verbindung zwischen den Leitersegmenten (3, 3') und der Kohlenstoffhülse durch Löten hergestellt wird, wobei sich die Lötverbindung auf radial innen liegende Teilbereiche der Stirnflächen der Leitersegmente (3') beschränkt.

5. Verfahren nach einem der Ansprüche 1 bis 4,
**dadurch gekennzeichnet,**
**daß** die gesamte Oberfläche der Kohlenstoffhülse metallisiert wird, wobei nach dem Zusammenfügen des Leiterrohlings mit der Kohlenstoffhülse, insbesondere nach dem Anspritzen des Trägerkörpers zumindest die radiale Außenfläche der Kohlenstoffhülse zum Entfernen der metallisierten Oberfläche bearbeitet wird.

6. Verfahren nach Anspruch 5,
**dadurch gekennzeichnet,**
**daß** die Kohlenstoffhülse nach ihrem Zusammenfügen mit dem Leiterrohling, insbesondere vor dem Anspritzen des Trägerkörpers (1) im äußeren Ring-Bereich beider Stirnseiten zum Entfernen der metallisierten Oberfläche bearbeitet wird.

7. Verfahren nach einem der Ansprüche 1 bis 6,
**dadurch gekennzeichnet,**
**daß** nach dem Zusammenfügen des Leiterrohlings mit der Kohlenstoffhülse, insbesondere vor dem Anspritzen des Trägerkörpers in die Kohlenstoffhülse benachbart zu dem Leiterrohling eine nach außen offene Ringnut eingearbeitet wird.

8. Verfahren nach einem der Ansprüche 1 bis 7,
**dadurch gekennzeichnet,**
**daß** die beiden Hälften des zum Spritzen des Trägerkörpers eingesetzten Spritzwerkzeugs auf zwei einander gegenüberliegenden, ringförmig geschlossenen, Dichtflächen, von denen eine auf der freien Stirnseite des Leiterrohlings und die andere auf der freien Stirnseite der Kohlenstoffhülse angeordnet ist, dichtend anliegen.

9. Trommelkommutator für eine elektrische Maschine, umfassend einen aus isolierendem Preßstoff gefertigten hülsenförmigen Trägerkörper (1), eine Mehrzahl von metallischen Leitersegmenten (3, 3') mit daran angeordneten Anschlußfahnen (8) und eine ebenso große Anzahl von Kohlenstoffsegmenten (4), welche mit den Leitersegmenten (3, 3') elektrisch leitend verbunden sind,
**gekennzeichnet durch** eine benachbart zu den Anschlußfahnen (8) angeordnete ringförmige, geschlossene im wesentlichen kreiszylindrische Oberfläche (19) mit alternierenden Preßstoffzonen und Metallzonen sowie eine metallisierte innere, mit dem Trägerkörper in Verbindung stehende Oberfläche der Kohlenstoffsegmente (4).

10. Trommelkommutator nach Anspruch 9,
**dadurch gekennzeichnet,**
**daß** die Leitersegmente (3, 3') in Umfangsrichtung vollständig in Preßmasse eingebettet sind, so daß in den die Kohlenstoffsegmente (4) gegeneinander isolierenden, Luftspalte bildenden Axialschnitten (16) kein Metall der Leitersegmente (3, 3') freiliegt.

11. Trommelkommutator nach Anspruch 9 oder Anspruch 10,
**dadurch gekennzeichnet,**
**daß** die Kohlenstoffsegmente (4) und die Leitersegmente (3, 3') sich radial nach innen erstreckende Ankerabschnitte (28; 11) aufweisen, die unter Ausbildung von Hinterschneidungen in den Trägerkörper (1) eingebettet sind.

12. Trommelkommutator nach Anspruch 11,
**dadurch gekennzeichnet,**
**daß** die Kohlenstoffsegmente und die Leitersegmente nur im Bereich der einander gegenüberstehenden Ankerabschnitte elektrisch leitend miteinander verbunden sind.

13. Trommelkommutator nach einem der Ansprüche 9 bis 12,
**dadurch gekennzeichnet,**
**daß** die Leitersegmente (3') jeweils einen dickwandigen Anschlußbereich (6') mit einer Anschlußfahne (8), einen das zugeordnete Kohlenstoffsegment (4) kontaktierenden dickwandigen Kontaktbereich (7') und einen zwischen dem Anschlußbereich (6') und dem Kontaktbereich (7') angeordneten dünnwandigen Übergangsbereich (31) aufweisen.

14. Trommelkommutator nach Anspruch 13,
**dadurch gekennzeichnet,**
**daß** die Übergangsbereiche im wesentlichen radial zur Kommutatorachse (2) orientiert sind.

15. Trommelkommutator nach Anspruch 13,
**dadurch gekennzeichnet,**
**daß** die Übergangsbereiche (31) schräg zur Kommutatorachse (2) orientiert sind.

16. Trommelkommutator nach einem der Ansprüche 13 bis 15,
**dadurch gekennzeichnet,**
**daß** zwischen den Anschlußbereichen (6') der Leitersegmente (3') einerseits und den Kohlenstoffsegmenten (4) andererseits jeweils eine Preßstoffrippe (30) besteht.

17. Trommelkommutator nach Anspruch 16,
**dadurch gekennzeichnet,**
**daß** die axiale Dicke der Preßstoffrippe (30) mindestens 0,5 mm beträgt.

18. Trommelkommutator nach einem der Ansprüche 9 bis 17,
**dadurch gekennzeichnet,**
**daß** die Anschlußfahnen (8) endseitig abgeschrägt sind, wobei die Abschrägungen den äußeren Umfangsflächen der Leitersegmente (3, 3') zugewandt sind.

19. Trommelkommutator nach einem der Ansprüche 13 bis 18,
**dadurch gekennzeichnet,**
**daß** die einander im Bereich der Kontaktzonen (17) zugewandten Stirnflächen der Leitersegmente (3, 3') und der Kohlenstoffsegmente (4) eben sind.

20. Trommelkommutator nach einem der Ansprüche 9 bis 19,
**dadurch gekennzeichnet,**
**daß** die den Leitersegmenten (3, 3') abgewandten Stirnseiten (25) der Kohlenstoffsegmente in einem radial inneren Bereich von einem Bund (14) des Trägerkörpers (1) abgedeckt sind.

21. Trommelkommutator nach Anspruch 20,
**dadurch gekennzeichnet,**
**daß** der Bund (14) des Trägerkörpers (1) in axialer Richtung über die Stirnfläche der Kohlenstoffsegmente (4) vorsteht.

## Claims

1. Method for producing a drum commutator, incorporating a sleeve-shaped support body (1) manufactured from isolating compressed material, a multitude of metallic conductor segments (3, 3'), and an equal multitude of carbon segments (4), which are connected with the conductor segments (3, 3') in an electrically conductive way, including the following steps:
- producing a metallic conductor precast incorporating a multitude of conductor segments, of which two each are adjacently positioned and connected with one another via a bridging part (20), whereby the distance of the radial inner surfaces of the bridging parts (20) from the commutator axis (2) substantially equals the distance of the radial outer surfaces of the conductor segments (3, 3') from the commutator axis (2);
- producing a carbon sleeve with a substantially circular cylindrical outer surface (26), whereby at least the radial inner surface and an axial facing surface of the carbon sleeve are metallised;
- joining of the conductor precast to the carbon sleeve in an axial direction whilst forming electrically conductive contact zones (17) between the conductor segments (3, 3') and the metallised facing surface of the carbon sleeve;
- casting of a support body (1) consisting of isolating compressed material onto the compound component consisting of the conductor precast and the carbon sleeve by means of a casting tool, whereby the metallised radial inner surface of the carbon sleeve is covered with compressed material;
- removal of the bridging parts (20) whilst forming an annular, closed and substantially circular cylindrical surface (19) with alternating compressed material zones and metal zones;
- forming of the carbon segments (4) by means of cutting axial cuts (16) into the carbon sleeve extending in a radial direction up to the support body (1), extending along axial planes positioned between two conductor segments (3, 3') each, whereby the annular, closed and substantially circular cylindrical surface (19) is at least partially maintained with alternating compressed material zones and metal zones.

2. Method according to Claim 1, **characterised in that** the axial cuts (16) with which the carbon sleeve is divided into carbon segments (4) are inserted only through carbon material and compressed material, but not through the metal of the conductor precast, i.e. the conductor segments (3, 3').

3. Method according to Claim 1 or Claim 2, **characterised in that** the conductor segments (3, 3') incorporate substantially radially projecting terminal tabs (8), whereby the bridging parts (20) extending across the entire axial length of the conductor precast are removed at least in part by means of axial shearing.

4. Method according to one of the Claims 1 to 3, **characterised in that** the electrically conductive connection between the conductor segments (3, 3') and the carbon sleeve is created by means of welding, whereby the solder connection is restricted to radial internal part sections of the facing surfaces of the conductor segments (3').

5. Method according to one of the Claims 1 to 4, **characterised in that** the entire surface of the carbon sleeve is metallised, whereby at least the radial outer surface of the carbon sleeve is processed for removal of the metallised surface following the joining of the conductor precast to the carbon sleeve, especially following the casting of the support body.

6. Method according to Claim 5, **characterised in that** the carbon sleeve is processed for removing the metallised surface within the outer annular section of both facing sides following the joining of the same to the conductor precast, especially prior to casting the support body (1).

7. Method according to one of the Claims 1 to 6, **characterised in that** following the joining of the conductor precast to the carbon sleeve a circular groove that is open towards the outside is produced adjacent to the conductor precast, especially prior to the casting of the support body to the carbon sleeve.

8. Method according to one of the Claims 1 to 7, **characterised in that** the two halves of the casting tool utilised for casting the support body closely abut against two opposing, circular, closed sealing surfaces, of which one is located on the free facing side of the conductor precast, and the other on the free facing side of the carbon material sleeve.

9. Drum commutator for an electric machine, incorporating a sleeve-shaped support body (1) manufactured from an isolating compressed material, a multitude of metallic conductor segments (3, 3') with terminal tabs (8) arranged upon the same, and an equal multitude of carbon segments (4), which are connected with the conductor segments (3, 3') in an electrically conductive way, **characterised by** an annular, closed, substantially circular cylindrical surface (19) with alternating compressed material zones and metal zones located adjacent to the terminal tabs (8) as well as a metallised inner surface of the carbon segments (4) connected with the support body.

10. Drum commutator according to Claim 9, **characterised in that** the conductor segments (3, 3') are completely embedded into the compressed material in a circumferential direction, so that none of the metal of the conductor segments (3, 3') is exposed within the axial cuts (16) that isolate the carbon segments (4) from one another and form air gaps.

11. Drum commutator according to Claim 9 or Claim 10, **characterised in that** the carbon segments (4) and the conductor segments (3, 3') incorporate anchor sections (28; 11) extending radially inwards, which are embedded into the support body (1) and form rear undercuts.

12. Drum commutator according to Claim 11, **characterised in that** the carbon segments and the conductor segments are connected with one another in an electrically conductive way only within the area of the opposing anchor sections.

13. Drum commutator according to one of the Claims 9 to 12, **characterised in that** the conductor segments (3') each incorporate a thick-walled connecting area (6') with a terminating tab (8), a thick-walled contact area (7') contacting the associated carbon segment (4), and a thin-walled transition area (31) located between the connecting area (6') and the contact area (7').

14. Drum commutator according to Claim 13, **characterised in that** the transition areas are orientated substantially radially in relation to the commutator axis (2).

15. Drum commutator according to Claim 13, **characterised in that** the transition areas (31) are orientated diagonally in relation to the commutator axis (2).

16. Drum commutator according to one of the Claims 13 to 15, **characterised in that** a compressed material rib (30) exists between the connecting areas (6') of the conductor segments (3') on one side, and the carbon segments (4) on the other.

17. Drum commutator according to Claim 16, **characterised in that** the axial thickness of the compressed material rib (30) is at least 0.5mm.

18. Drum commutator according to one of the Claims 9 to 17, **characterised in that** the terminal tabs (8) are tapered at their ends, whereby the tapering faces the outer circumferential surfaces of the conductor segments (3, 3').

19. Drum commutator according to the Claims 13 to 18, **characterised in that** the facing surfaces of the conductor segments (3, 3') facing one another within the area of the contact zones (17) and the carbon segments (4) are planar.

20. Drum commutator according to one of the Claims 9 to 19, **characterised in that** the facing surfaces (25) of the carbon segments facing away from the conductor segments (3, 3') are covered by a band (14) of the support body (1) within a radial inner area.

21. Drum commutator according to Claim 20, **characterised in that** the band (14) of the support body (1) projects across the facing surface of the carbon segments (4) in an axial direction.

## Revendications

1. Procédé de fabrication d'un commutateur de bobine comprenant un corps porteur (1) en forme de douille fabriqué en une matière comprimée isolante, une pluralité de segments conducteurs métalliques (3, 3') et le même nombre de segments de carbone (4) qui leur sont reliés avec conductibilité électrique, ce procédé présentant les étapes suivantes :
- fabrication d'une ébauche conductrice métallique comprenant une pluralité de segments conducteurs, avec liaison entre deux conducteurs voisins chaque fois par une partie de pont, la distance entre les faces internes radiales des parties de pont (20) et l'axe de commutateur (2) correspondant essentiellement à la distance entre les faces externes radiales des segments conducteurs (3, 3') et l'axe de commutateur (2),
- fabrication d'une douille de carbone présentant une surface externe (26), essentiellement en forme de cylindre circulaire, et dans laquelle au moins la surface interne radiale et une face frontale axiale sont métallisées,
- jonction de l'ébauche conductrice et de la douille de carbone en direction axiale, avec formation de zones de contact (7) conductrices de l'électricité entre les segments conducteurs (3, 3') et la face frontale métallisée de la douille de carbone,
- réalisation, dans un outil d'injection, d'un corps porteur (1) en matière comprimée isolante, par injection sur la pièce composite constituée de l'ébauche conductrice et de la douille de carbone, avec couverture de la surface interne radiale métallisée de la douille de carbone par la matière comprimée,
- élimination des parties de pont (20) avec formation d'une surface annulaire (19) fermée et essentiellement en forme de cylindre circulaire comportant des zones alternées de matière comprimée et de métal,
- formation des segments de carbone (4) en entaillant la douille de carbone par des coupes axiales (16) pénétrant radialement jusqu'au corps porteur (1) et qui sont situées chacune dans des plans axiaux entre deux segments conducteurs (3'), la surface (19) annulaire fermée essentiellement de forme cylindrique circulaire et comportant des zones alternées de matière comprimée et de métal étant conservée au moins en partie.

2. Procédé selon la revendication 1, **caractérisé en ce que** les coupes axiales (16) par lesquelles la douille de carbone est divisée en segments de carbone (4), traversent seulement le carbone et la masse comprimée, mais ne passent pas dans le métal de l'ébauche conductrice et des segments conducteurs (3, 3').

3. Procédé selon la revendication 1 ou 2, **caractérisé en ce que** les segments conducteurs (3, 3') présentent des pattes de raccordement (8) faisant saillie essentiellement radialement, les parties de pont (20), couvrant toute la longueur axiale de l'ébauche conductrice, étant éliminées au moins en partie par coupe axiale.

4. Procédé selon une des revendications 1 à 3, **caractérisé en ce que** la liaison conductrice de l'électricité entre les segments conducteurs (3, 3') et la douille de carbone est réalisée par brasage et que cette liaison est limitée aux parties situées radialement à l'intérieur des faces frontales des segments conducteurs (3').

5. Procédé selon une des revendications 1 à 4, **caractérisé en ce que** toute la surface de la douille de carbone est métallisée, et qu'après jonction de l'ébauche conductrice avec la douille de carbone, en particulier après injection du corps porteur, au moins la surface externe radiale de la douille de carbone est usinée de manière à retirer la surface métallisée.

6. Procédé selon la revendication 5, **caractérisé en ce que** la douille de carbone après sa jonction avec l'ébauche conductrice, en particulier avant une injection du corps porteur (1) est usinée sur la zone annulaire externe des deux faces frontales, de manière à retirer la surface métallisée.

7. Procédé selon une des revendications 1 à 6, **caractérisé en ce qu'**après la jonction de l'ébauche conductrice avec la douille de carbone, en particulier avant l'injection du corps porteur, il est procédé à l'usinage dans la douille de carbone, près de l'ébauche, d'une rainure annulaire ouverte vers l'extérieur.

8. Procédé selon une des revendications 1 à 7, **caractérisé en ce que** les deux moitiés de l'outil d'injection utilisé pour injecter le corps porteur sont appliquées avec étanchéité sur deux portées d'étanchéité annulaires et fermées se faisant face, dont l'une se trouve sur la face frontale libre de l'ébauche conductrice et l'autre sur la face frontale libre de la douille de carbone.

9. Commutateur de bobine pour une machine électrique comprenant un corps porteur (1) fabriqué en une matière comprimée isolante, une pluralité de segments conducteurs métalliques (3, 3') avec des pattes de raccordement (8) montés sur ceux-ci, et le même nombre de segments de carbone (4) reliés avec conductibilité électrique aux segments conducteurs (3, 3'), **caractérisé en ce qu'**il comporte près des pattes de raccordement, une surface annulaire (19) fermée et ayant essentiellement la forme d'un cylindre circulaire avec en alternance des zones de matière comprimée et des zones métalliques, ainsi qu'une surface interne des segments de carbone (4) qui est métallisée et reliée au corps porteur.

10. Commutateur de bobine selon la revendication 9, **caractérisé en ce que** les segments conducteurs (3, 3') sont en direction périphérique, totalement noyés dans la masse comprimée, de sorte que dans les coupes axiales (16) formant des fentes d'air isolant l'un de l'autre les segments de carbone (4), le métal des segments conducteurs (3, 3') n'est pas dénudé.

11. Commutateur de bobine selon la revendication 9 ou 10, **caractérisé en ce que** les segments de carbone (3) et les segments conducteurs (3, 3') présentent des parties d'ancrage (28, 11) s'étendant radialement vers l'intérieur et noyées dans le corps porteur (1) avec formation de contredépouilles.

12. Commutateur de bobine selon la revendication 11, **caractérisé en ce que** les segments de carbone et les segments conducteurs sont reliés entre eux avec conductibilité électrique seulement dans la zone des parties d'ancrage se faisant face.

13. Commutateur de bobine selon une des revendications 9 à 12, **caractérisé en ce que** les segments conducteurs (3') présentent chacun une zone de raccordement (6') à paroi épaisse avec une patte de raccordement (8), une zone de contact (7') à paroi épaisse et en contact avec le segment de carbone (4) associé, et entre la zone de raccordement (6') et la zone de contact (7'), une zone de transition (31) à paroi mince.

14. Commutateur de bobine selon la revendication 13, **caractérisé en ce que** les zones de transition sont orientées essentiellement radialement par rapport à l'axe (2) du commutateur.

15. Commutateur de bobine selon la revendication 13, **caractérisé en ce que** les zones de transition (31) sont orientées obliquement par rapport à l'axe (2) du commutateur.

16. Commutateur de bobine selon une des revendications 13 à 15, **caractérisé en ce qu'**entre les zones de raccordement (6') des segments conducteurs (3') d'une part, et les segments de carbone (4) d'autre part, se trouve chaque fois une nervure de matière comprimée (30).

17. l'épaisseur axiale de la nervure de matière comprimée (30) est d'au moins 0,5 mm.

18. Commutateur de bobine selon une des revendications 9 à 17, **caractérisé en ce que** les pattes de raccordement (8) sont chanfreinées à leurs extrémités, avec leurs chanfreins en regard des surfaces périphériques externes des segments conducteurs (3, 3').

19. Commutateur de bobine selon une des revendications 13 à 18, **caractérisé en ce qu'**au niveau des zones de contact (17), les portées frontales des segments conducteurs (3, 3') et des segments de carbone (4), qui sont tournées les unes vers les autres, sont planes.

20. Commutateur de bobine selon une des revendications 9 à 19, **caractérisé en ce que** les faces frontales (25) des segments de carbone qui sont éloignées des segments conducteurs (3, 3') sont recouvertes dans une zone radialement interne par un collet (14) du corps porteur (1).

21. Commutateur de bobine selon la revendication 20, **caractérisé en ce que** le collet (4) du corps porteur (1) fait saillie en direction axiale sur la face frontale des segments de carbone (4).
